# EUROPÄISCHE PATENTANMELDUNG

(11) **EP 2 998 624 A1**
(43) Veröffentlichungstag der Anmeldung: **23.03.2016**
(21) Anmeldenummer: 15183270.6
(22) Anmeldetag: 01.09.2015
(51) Int. Cl.: F16K 27/12, D06F 39/08

(54) **SCHUTZHÜLLE FÜR EIN VENTIL EINER WASCHMASCHINE**

(30) Priorität: 09.09.2014 DE 102014112949
(71) Anmelder: Miele & Cie. KG, 33332 Gütersloh (DE)
(72) Erfinder: Melies, Sascha, 33332 Gütersloh (DE); Bicker, Rainer, 33415 Verl (DE); Schrewe, Christian, 33397 Rietberg (DE); Schuller, Bernd-Christian, 33334 Gütersloh (DE); Kröger, Günter, 32369 Rahden (DE)

(57) **Zusammenfassung**

Die Erfindung betrifft eine Schutzhülle (102) für ein Ventil (100), wobei die Schutzhülle (102) die einen Grundkörper (102) aus einem elastischen Material und zumindest einer Lasche (114), aufweist. Der Grundkörper (102) ist dazu ausgebildet, das Ventil (100) zumindest teilweise zu umschließen. Die Lasche (114) ist dazu ausgebildet, die Schutzhülle (102) und das darin anordenbare Ventil (100) zu befestigen. Die Lasche (114) ist mit dem Grundkörper (102) einstückig verbunden.

## Beschreibung

Die Erfindung betrifft eine Schutzhülle für ein Ventil, ein Ventil und eine Waschmaschine.

Ein Magnetventil in einer Waschmaschine verursacht beim Betätigen des Magnetventils Schwingungen, die auf Bauteile in der Waschmaschine übertragen werden.

Der Erfindung stellt sich somit das Problem, dass die Schwingungen Geräusche verursachen, die umso intensiver werden, je öfter das Magnetventil betätigt wird.

Erfindungsgemäß wird dieses Problem durch eine Schutzhülle für ein Ventil mit den Merkmalen des Patentanspruchs 1, ein Ventil mit den Merkmalen des Patentanspruchs 7 und eine Waschmaschine mit den Merkmalen des Patentanspruchs 8 gelöst. Vorteilhafte Ausgestaltungen und Weiterbildungen der Erfindung ergeben sich aus den nachfolgenden Unteransprüchen.

Schwingungen eines Magnetventils werden umso direkter auf eine Tragkonstruktion übertragen, je starrer und unflexibler das Ventil mit der Unterkonstruktion verbunden ist.

Bei dem hier vorgestellten Ansatz wird das Magnetventil über eine elastische Schutzhülle flexibel gelagert. Die flexible Lagerung absorbiert die vom Ventil ausgehenden Schwingungen. Die Schutzhülle nimmt einen Ventilkörper des Magnetventils und einen Antrieb des Magnetventils zumindest teilweise auf und weist Anschraubpunkte zum Befestigen des Ventils mit der Schutzhülle an der Tragkonstruktion auf.

Die mit der Erfindung erreichbaren Vorteile bestehen neben einer Geräuschdämmung in einer vereinfachten Montagemöglichkeit des Ventils und einem Schutz empfindlicher Teile des Ventils vor Spritzwasser.

Es wird eine Schutzhülle für ein Ventil vorgestellt, wobei die Schutzhülle die folgenden Merkmale aufweist:
einen Grundkörper aus einem elastischen Material, wobei der Grundkörper dazu ausgebildet ist, das Ventil zumindest teilweise zu umschließen; und
zumindest einer Lasche zum Befestigen der Schutzhülle und des darin anordenbaren Ventils, wobei die Lasche mit dem Grundkörper einstückig verbunden ist.

Weiterhin wird ein Ventil mit folgenden Merkmalen vorgestellt:
einer Schutzhülle gemäß dem hier vorgestellten Ansatz; und
einem Ventilkörper, der zumindest teilweise von der Schutzhülle umschlossen ist, wobei ein Einlauf des Ventils und ein Auslauf des Ventils aus der Schutzhülle ragen.

Ferner wird eine Waschmaschine mit zumindest einem Ventil gemäß dem hier vorgestellten Ansatz vorgestellt, wobei das Ventil unter Verwendung der Lasche mit einem Bestandteil der Waschmaschine verbunden ist.

Unter einem Ventil kann ein Magnetventil verstanden werden. Eine Lasche kann einen Anschraubpunkt ausbilden.

Ausführungsbeispiele der Erfindung sind in den Zeichnungen rein schematisch dargestellt und werden nachfolgend näher beschrieben. Es zeigt
- Figur 1: Darstellungen eines Ventils mit einer Schutzhülle gemäß einem Ausführungsbeispiel der vorliegenden Erfindung;
- Figur 2: Darstellungen eines Ventils mit und ohne eine Schutzhülle gemäß einem Ausführungsbeispiel der vorliegenden Erfindung;
- Figur 3: Darstellungen einer Schutzhülle gemäß einem Ausführungsbeispiel der vorliegenden Erfindung;
- Figur 4: eine Darstellung einer Waschmaschine mit einem Ventil gemäß einem Ausführungsbeispiel der vorliegenden Erfindung.

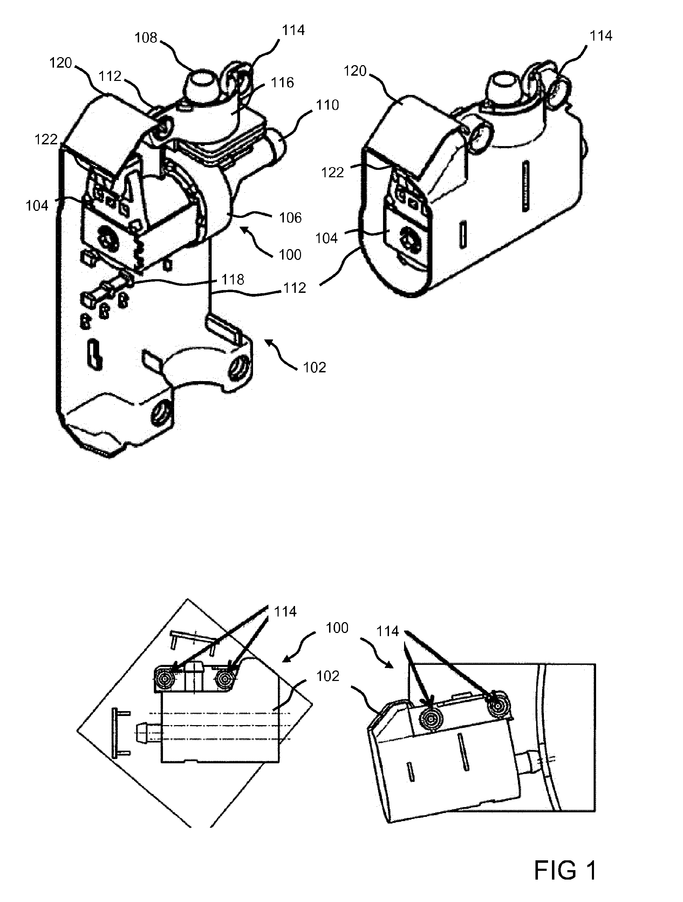

Fig. 1 zeigt Darstellungen eines Ventils 100 mit einer Schutzhülle 102 gemäß einem Ausführungsbeispiel der vorliegenden Erfindung. Das Ventil 100 und die Schutzhülle 102 sind in verschiedenen Ansichten dargestellt. Die verschiedenen Ansichten zeigen jeweils im Wesentlichen identische Ausführungsbeispiele der vorliegenden Erfindung. Das Ventil 100 ist ein Magnetventil 100 mit einer Antriebseinrichtung 104 und einem Ventilgehäuse 106. Das Ventil 100 ist als Eckventil ausgebildet. Das Ventilgehäuse 106 weist einen Einlauf 108 und einen Auslauf 110 auf. Der Einlauf 108 und der Auslauf 110 sind zueinander in einen Winkel von 90° angeordnet. Die Antriebseinrichtung 104 ist gegenüber dem Auslauf 110 angeordnet. Der Einlauf 108 und der Auslauf 110 des Ventils 100 ragen aus der Schutzhülle 102.

Die Schutzhülle 102 weist einen Grundkörper 112 und zwei Laschen 114 auf. Der Grundkörper 112 ist in dem hier dargestellten Ausführungsbeispiel als wickelbarer Gummilappen 112 ausgeführt. Dabei ist der Gummilappen 112 dazu ausgebildet, die Antriebseinrichtung 104 und das Ventilgehäuse 106 zu umschließen. Die zwei Laschen 114 sind mit dem Grundkörper 112 einstückig verbunden und weisen Durchgangsbohrungen zum Befestigen der Schutzhülle 102 und des darin eingewickelten Ventils 100 an einer Trägerstruktur auf. Die Laschen 114 sind zweiteilig ausgeführt. Dabei ist jeweils ein erster Teil einer Lasche 114 im Bereich eines ersten Endes des Gummilappens 112 angeordnet. Jeweils ein zweiter Teil einer Lasche 114 ist im Bereich eines, der dem ersten Ende gegenüberliegenden zweiten Endes des Gummilappens 112 angeordnet.

Der Gummilappen 112 ist über eine Schlauchschelle 116 mit dem Einlauf 108 des Ventilgehäuses 106 verbunden. Die Schlauchschelle 116 ist in gewickeltem Zustand des Gummilappens 112 zwischen den ersten Teilen und den zweiten Teilen der Laschen 114 geklemmt. Zwischen den zweiten Teilen der Laschen 114 ist ein Abdruck der Schlauchschelle 116 ausgeformt, über den ein Formschluss erreicht wird, wenn die ersten Teile der Laschen 114 mit den zweiten Teilen der Laschen 114 verbunden sind. In gewickeltem Zustand bildet der Gummilappen 112 einen Wickel aus, der im Wesentlichen parallel zu einer Achse durch den Auslauf 110 und die Antriebseinrichtung 104 ausgerichtet ist.

Auf einer, dem Ventil 100 zugewandten Seite des Gummilappens 112, also einer Innenseite des Wickels, sind im Bereich der Antriebseinrichtung 104 Abstandhalter 118 angeordnet. Die Abstandhalter 118 sind dazu ausgebildet, einen gegenüber dem Ventilgehäuse 106 geringeren Außendurchmesser der Antriebseinrichtung 104 auszugleichen und einen Formschluss zwischen dem Ventil 100 und der Schutzhülle 102 zu erzeugen.

Weiterhin weist der die Schutzhülle 102 eine Abdeckung 120 elektrischer Anschlüsse 122 des Ventils 100 auf. Die Abdeckung 120 ist dazu ausgebildet, die elektrischen Anschlüsse 122 vor Spritzwasser zu schützen. Die Abdeckung 120 ist zweiteilig ausgeführt. Ein erster Teil der Abdeckung 120 ist an dem ersten Ende des Gummilappens 112 angeordnet, während ein zweiter Teil der Abdeckung 120 an dem gegenüberliegenden zweiten Ende des Gummilappens 112 angeordnet ist. Wenn der Gummilappen 112 um das Ventil 100 gewickelt ist, wird die Überlappung ausgebildet.

Weiterhin ist das Ventil 100 mit der Schutzhülle 102 in zwei unterschiedlichen Einbausituationen dargestellt. Dabei ist die Schutzhülle 102 über die Laschen 114 jeweils mit der vorgesehenen Tragkonstruktion über Befestigungsmittel verbunden. Beispielsweise kann die Schutzhülle 102 unter Verwendung von Schrauben oder Niete mit der Tragkonstruktion verbunden werden.

Unterschiedliche Darstellungen zeigen das Ventil 100 mit aufgeklapptem Gummilappen 112 und das Ventil 100 mit montagefertigem Gummilappen 112. Die Laschen 114 bilden jeweils Anschraubpunkte 114 aus.

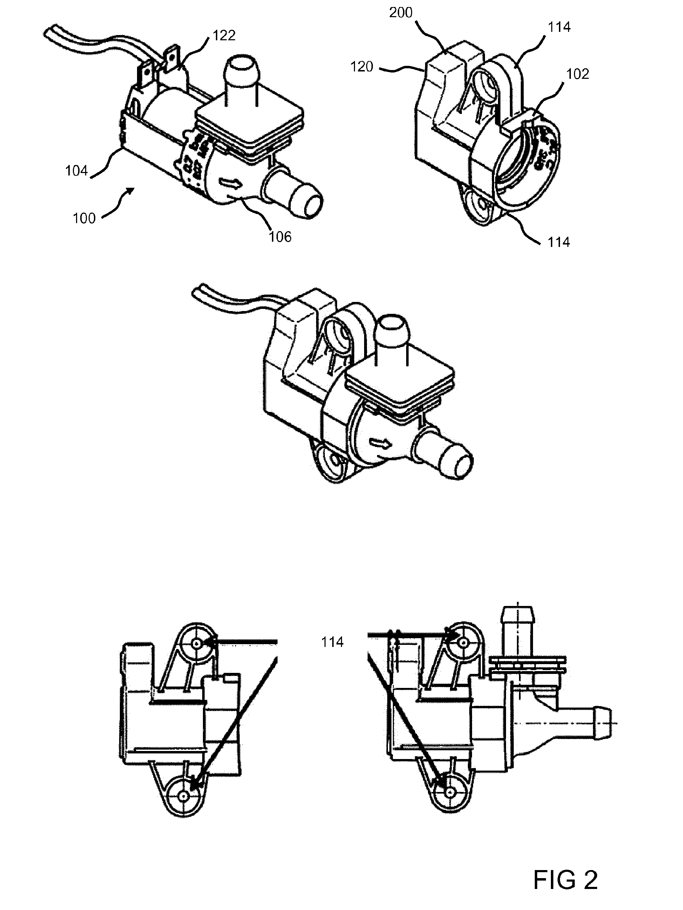

Fig. 2 zeigt Darstellungen eines Ventils 100 mit und ohne eine Schutzhülle 102 gemäß einem Ausführungsbeispiel der vorliegenden Erfindung. Wie in Fig. 1 sind das Ventil 100 und die Schutzhülle 102 in verschiedenen Ansichten dargestellt. Das Ventil 100 entspricht im Wesentlichen dem in Fig. 1 dargestellten Ventil.

Die Schutzhülle 102 ist im hier dargestellten Ausführungsbeispiel als Spritzteil 102 beziehungsweise Spritzgussteil 102 oder Umspritzung 102 aus einem elastischen Material ausgeführt. Dabei sind der Grundkörper und die Laschen 114 aus einem Guss. Das Spritzteil 102 weist in weiten Bereichen eine Innenkontur auf, die einer Außenkontur des Ventilgehäuses 106 sowie der Antriebseinrichtung 104 entspricht. Das Spritzteil 102 ist dazu ausgebildet, das Ventil 100 zumindest teilweise formschlüssig zu umschließen. In diesem Ausführungsbeispiel sind die Laschen 114 auf gegenüberliegenden Seiten des Ventils 100 angeordnet.

In einem Ausführungsbeispiel ist das Spritzteil 102 zweiteilig ausgeführt. Dabei verläuft eine Trennfuge 200 durch das Spritzteil 102. Die Trennfuge 200 verläuft mittig durch die Laschen 114. Zur Montage wird das Ventil 100 in eine erste Halbschale des Spritzteils 102 eingelegt und die zweite Halbschale auf dem Ventil 100 ausgerichtet. Beim Befestigen der Schutzhülle 102 unter Verwendung der Laschen 114 wird die Trennfuge 200 zusammengezogen und das Ventil 100 zwischen den Halbschalen des Spritzteils 102 geklemmt.

In einem Ausführungsbeispiel ist das Spritzteil 102 einteilig ausgeführt. Hier verläuft die Trennfuge 200 lediglich durch eine der Laschen 114. Zur Montage wird die Trennfuge 200 aufgespreizt und das Ventil 100 in das aufgespreizte Spritzteil 102 eingelegt. Wenn die Trennfuge 200 geschlossen wird, wird das Ventil 100 innerhalb des Spritzteils 102 durch eine einkonstruierte Vorspannung sicher gehalten.

In einem weiteren Ausführungsbeispiel ist das Spritzteil 102 ohne Trennfuge ausgeführt. Der Innendurchmesser des Spritzteils 102 ist hier etwas kleiner, als der Außendurchmesser des Ventils 100. Beim Zusammenfügen wird die Schutzhülle 102 gedehnt. Dadurch wird ein Anpressdruck zum sicheren Halten des Ventils 100 in der Schutzhülle 102 erzeugt.

Die Abdeckung 120 für die elektrischen Anschlüsse 122 ist ebenfalls in das Spritzteil 102 eingearbeitet.

In dem in Fig. 2 dargestellten Ausführungsbeispiel ist eine Umspritzung des Ventils 100 mit einer elastischen Masse 102 dargestellt, welche das Ventil 100 abdichtet. Die elastische Masse 102 ist derart gestaltet, dass sie ebenfalls die Funktion einer Positionierung bzw. Lagerung des Ventils 100 übernimmt.

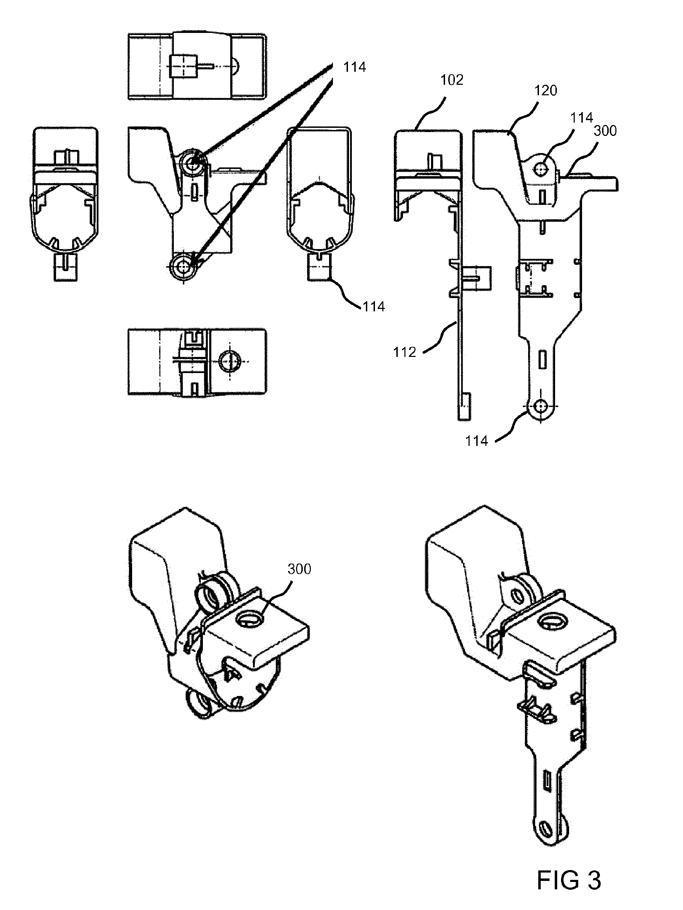

Fig. 3 zeigt Darstellungen einer Schutzhülle 102 gemäß einem Ausführungsbeispiel der vorliegenden Erfindung. Die Schutzhülle 102 ist in verschiedenen Ansichten dargestellt. Dabei ist in den Ansichten jeweils ein im Wesentlichen identisches Ausführungsbeispiel der vorliegenden Erfindung dargestellt. In der hier dargestellten Schutzhülle 102 sind Gestaltungselemente aus den in den Figuren 1 und 2 dargestellten Schutzhüllen kombiniert. Die hier dargestellte Schutzhülle 102 ist teilweise als Spritzteil 102 und teilweise als wickelbarer Gummilappen 112 ausgeführt. Dabei ist der Gummilappen 112, im Unterschied zu dem in Fig. 1 dargestellten Gummilappen, dazu ausgebildet, einen geringeren Anteil des hier nicht dargestellten Ventils zu umschließen. Im Wesentlichen wird von der hier dargestellten Schutzhülle 102 das Pumpengehäuse umschlossen. Ein signifikanter Anteil der Antriebseinrichtung wird nicht umschlossen.

Die Abdeckung 120 ist hier einteilig ausgeführt. Zusätzlich weist die hier dargestellte Schutzhülle 102 einen Kragen 300 auf, der dazu ausgebildet ist, den Einlauf des Ventils zu umschließen. Dazu ist der Einlauf aus einer Einführrichtung in die Schutzhülle 102 einsteckbar. Beim Einstecken des Einlaufs werden gleichzeitig die elektrischen Anschlüsse in die Abdeckung 120 eingeführt. Anschließend wird der Gummilappen 112 um das Ventilgehäuse gewickelt, die zweiteilige Lasche 114 verbunden und mit einem Befestigungsmittel an der Tragkonstruktion befestigt. Dadurch wird das Ventil sicher in der Schutzhülle 102 gehalten.

Die Schutzhülle 102 weist eine zweite Lasche 114 auf. Die zweite Lasche 114 ist hier einteilig ausgeführt. Die zweite Lasche 114 ist an den wickelbaren Gummilappen 112 angeformt und ist in gewickeltem Zustand wie in Fig. 2 gegenüberliegend zu der ersten Lasche 114 angeordnet.

In dem in den Figuren 1 und 3 dargestellten Ausführungsbeispiel weist die Schutzhülle 102 die Gestalt eines "Gummilappens 112" auf, welcher um das Ventil 100 gewickelt wird und hier die Schwingungen und Kräfte übernimmt und das Ventil 100 an wichtigen Stellen gegen Spritzwasser schützt. In Fig. 3 ist der Gummilappen 112 ohne Ventil 100 dargestellt.

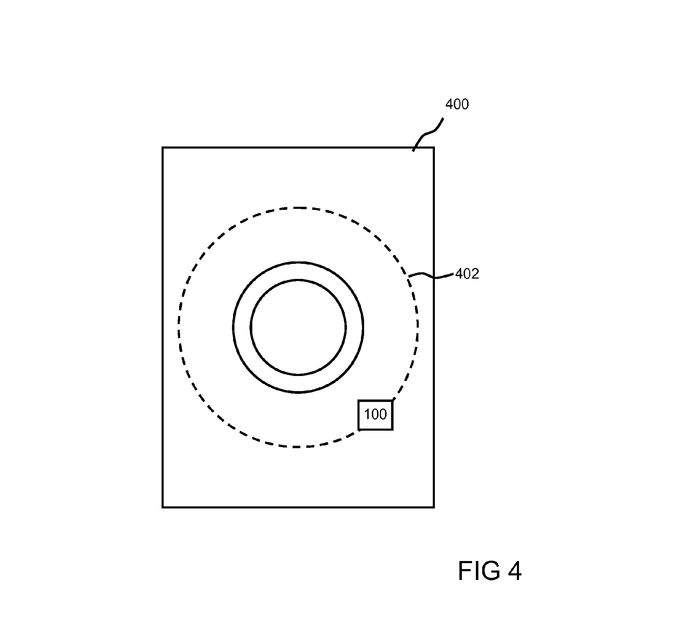

Fig. 4 zeigt eine Darstellung einer Waschmaschine 400 mit einem Ventil 100 gemäß einem Ausführungsbeispiel der vorliegenden Erfindung. Die Waschmaschine 400 kann als Waschautomat 400 bezeichnet werden. Der Waschautomat 400 ist mit einer Trommel ausgeführt und weist einen im Gehäuse schwingbeweglich gelagerten Laugenbehälter 402 auf, in dem die drehbar gelagerte Trommel angeordnet ist. Durch Unwuchten gerät beim Schleudern der Laugenbehälter 402 in Schwingung. Über Kopplungselemente beziehungsweise Feder-Dämpfer-Systeme, mit denen der Laugenbehälter 402 im Gehäuse angebracht ist, werden Kräfte auf das Gehäuse übertragen und über dieses in den Fußboden weitergeleitet.

Bei einer herkömmlichen Waschmaschine kann dies zu unerwünschten Vibrationen im Waschautomatenumfeld und zu erhöhten Geräuschemissionen führen. Außerdem wird durch den Platz, der für den schwingenden Laugenbehälter im Waschautomatengehäuse vorgehalten wird, das Nutzvolumen der Waschtrommel begrenzt.

Eine Reduktion der Laugenbehälterschwingungen ist durch einen aktiven Unwuchtausgleich im Bereich der Trommel realisierbar. Die in der Trommel befindliche Wäscheunwucht kann nahezu vollständig während eines Hochlaufs durch Einspritzen von Flüssigkeiten, beispielsweise Wasser, in zwei Auswuchtringe, die vorne und hinten an der Trommel befestigt sind, kompensiert werden. Das Wasser wird über schnell schaltende Ventile 100 und Düsen in die rotierenden Wuchtringe eingespritzt.

Das schnell schaltende Ventil 100 ist am Laugenbehälter 402 befestigt. Wenn das Ventil 100 starr mit dem Laugenbehälter 402 verbunden wäre, würde der Laugenbehälter 402 die beim Schalten entstehenden Vibrationen aufnehmen und als Resonanzkörper zu einer erhöhten Geräuschemission führen. Der hier vorgestellte Ansatz zeigt eine Entkopplung des Ventils 100 für eine solche Active Balance Technologie.

Das Ventil 100 weist für ein einfaches Handling in der Montage elektrische Steckverbindungen auf. Diese Steckverbindungen werden durch die hier vorgestellte Schutzhülle gegen mögliches Spritzwasser ausreichend geschützt.

Der Spritzwasserschutz und die Lagerung können auch durch eine Trennung der Funktion getrennt voneinander gelöst werden.

Durch die hier vorgestellte Schutzhülle kann eine andere Einbausituation mit mehr Platz und einer abweichenden Anbindung gewählt werden. Die Schwingungen, welche von dem Ventil verursacht werden, werden entkoppelt. Die Schutzhülle schwingt mit dem Aggregat 100 mit.

Die Funktionen Schwingungsisolierung und Spritzwasserschutz werden gemeinsam betrachtet.

Durch den hier vorgestellten Ansatz erfolgt eine Entkopplung des Ventils 100 vom Laugenbehälter 402, damit die auftretenden Schwingungen nicht zu einer Geräuschbelastung führen. Gleichzeitig wird ein ausreichender Spritzwasserschutz gewährleistet.

Das Ventil 100 ist über ein Gummielement gelagert, welches gleichzeitig eine abschirmende Funktion übernimmt und auftretendes Wasser von den Verbindungsstellen fernhält.

Da das Ventil 100 nahezu umlaufend von einem elastischen Material umgeben ist und ein eventuelles Anschlagen sich nicht mehr durch ein hörbares Klopfen bemerkbar macht, kann der benötigte Schwingraum verringert werden.

Ebenfalls können hier Bauteile wie zum Beispiel ein Gehäuse und das Handling dieser eingespart werden.

## Patentansprüche

1. Schutzhülle (102) für ein Ventil (100), wobei die Schutzhülle (102) die folgenden Merkmale aufweist:
einen Grundkörper (102) aus einem elastischen Material, wobei der Grundkörper (102) dazu ausgebildet ist, das Ventil (100) zumindest teilweise zu umschließen; und
zumindest einer Lasche (114) zum Befestigen der Schutzhülle (102) und des darin anordenbaren Ventils (100), wobei die Lasche (114) mit dem Grundkörper (102) einstückig verbunden ist.

2. Schutzhülle (102) gemäß Anspruch 1, bei der der Grundkörper (102) eine formschlüssige Schnittstelle (118) zum Halten des Ventils (100) aufweist.

3. Schutzhülle (102) gemäß einem der vorhergehenden Ansprüche, bei der der Grundkörper (102) eine Abdeckung (120) für eine elektrische Schnittstelle (122) des Ventils (100) aufweist.

4. Schutzhülle (102) gemäß einem der vorhergehenden Ansprüche, bei der die Lasche (114) zweiteilig ausgeführt ist, wobei ein erster Teil der Lasche (114) eine formschlüssige Schnittstelle zu einem zweiten Teil der Lasche (114) aufweist.

5. Schutzhülle (102) gemäß einem der vorhergehenden Ansprüche, bei der der Grundkörper (112) um das Ventil (100) wickelbar ist, um das Ventil (100) aufzunehmen.

6. Schutzhülle (102) gemäß einem der vorhergehenden Ansprüche, bei der ein Innendurchmesser des Grundkörpers (102) kleiner ist, als ein Außendurchmesser des Ventils (100).

7. Ventil (100) mit folgenden Merkmalen:
einer Schutzhülle (102) gemäß einem der vorhergehenden Ansprüche; und
einem Ventilkörper (106), der zumindest teilweise von der Schutzhülle (102) umschlossen ist, wobei ein Einlauf (108) des Ventils (100) und ein Auslauf (110) des Ventils (100) aus der Schutzhülle (102) ragen.

8. Waschmaschine (400) mit zumindest einem Ventil (100) gemäß Anspruch 7, wobei das Ventil (100) unter Verwendung der Lasche (114) mit einem Bestandteil (402) der Waschmaschine (400) verbunden ist.
